Europäisches Patentamt

European Patent Office

Office européen des brevets

(19)

(11) Veröffentlichungsnummer: **0 274 569**
**B1**

(12)    **EUROPÄISCHE PATENTSCHRIFT**

(45) Veröffentlichungstag der Patentschrift: **23.01.91**

(21) Anmeldenummer: **87112619.9**

(22) Anmeldetag: **29.08.87**

(51) Int. Cl.⁵: **A 47 B 17/03,** A 47 B 46/00, F 16 C 11/10

(54) Schreibtisch mit einer zusätzlichen Pultplatte.

(30) Priorität: **13.12.86 DE 3642672**

(43) Veröffentlichungstag der Anmeldung:
**20.07.88 Patentblatt 88/29**

(45) Bekanntmachung des Hinweises auf die
Patenterteilung:
**23.01.91 Patentblatt 91/04**

(84) Benannte Vertragsstaaten:
**AT BE CH DE ES FR GB GR IT LI LU NL SE**

(56) Entgegenhaltungen:
**EP-A-0 094 376**
**FR-A-2 298 295**
**US-A-1 874 143**

(73) Patentinhaber: **Steinhilber, Helmut**
**Vorrütiweg 12**
**CH-6052 Hergiswil (CH)**

(72) Erfinder: **Steinhilber, Helmut**
**Vorrütiweg 12**
**CH-6052 Hergiswil (CH)**

(74) Vertreter: **Patentanwälte Dipl.-Ing. Klaus**
**Westphal Dr. rer. nat. Bernd Mussgnug Dr.**
**rer.nat. Otto Buchner**
**Waldstrasse 33**
**D-7730 VS-Villingen-Schwenningen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft einen Schreibtisch mit einer zusätzlichen Pultplatte gemäß dem Oberbegriff des Patentanspruchs 1.

An Schreibtischen wird im allgemeinen sitzend gearbeitet. Viele Menschen empfinden jedoch eine länger andauernde sitzenden Tätigkeit als unangenehm oder beschwerlich. Eine stehende Tätigkeit an einem Stehpult ist daher als Abwechslung und zeitweilige Unterbrechung der sitzenden Tätigkeit am Schreibtisch willkommen. Ein zu diesem Zweck neben dem Schreibtisch aufgestelltes Stehpult ist wegen seines Platzbedarfs und häufig auch wegen seines Aussehens störend.

Aus dem DE—GM 76 40 777 ist ein derartiger Schreibtisch bekannt, bei welchem eine zusätzliche Pultplatte in einer Ruhestellung unter der Tischplatte angeordnet ist und dort den Boden eines Ablagefaches bildet. Die Pulplatte kann in seitlichen Nuten geführt unter der Tischplatte herausgezogen und nach oben in eine Arbeitsstellung geschwenkt werden. In dieser Arbeitsstellung ragt die Pultplatte schräg nach oben frei über die Tischplatte des Schreibtisches, wobei sie durch in die Nuten eingreifende Führungszapfen in ihre Arbeitsstellung gehalten wird. Die benutzerseitige Kante der zusätzlichen Pultplatte fällt in der Arbeitsstellung mit der benutzerseitigen Kante der Tischplatte des Schreibtisches zusammen. Die zusätzliche Pultplatte kann also auch nur als Arbeitsfläche für eine sitzende Tätigkeit verwendet werden. Als Stehpult ist die zusätzliche Pultplatte ungeeignet.

Um den zusätzlichen Platzbedarf zu vermeiden, ist es bekannt (z.B. DE—PS 49 504, DE—PS 59 420), einen Teil der Tischplatte des Schreibtisches in der Höhe verstellbar auszubilden, so daß dieser Teil hochgestellt und als Stehpult verwendet werden kann. Zur Verwendung als Stehpult muß dieser Teilbereich der Tischplatte geräumt werden und steh während der Benutzung des Stehpults nicht als Ablagefläche zur Verfügung. Die Umwandlung in eine Stehpult ist daher zeitaufwenig und lästig, was einem häufigeren Wechsel zwischen sitzender und stehender Tätigkeit entgegensteht.

Weiter ist es bekannt (DE—PS 66 157, DE—GM 75 10 211), in den Aufsatz eines Schreibtisches eine zusätzliche Pultplatte einzusetzen, die in ihrer Ruhestellung in diesen Aufsatz eingeschoben oder eingeschwenkt ist und aus dem Aufsatz heraus in eine Arbeitsstellung bewegt wird, wenn eine stehende Tätigkeit am Stehpult gewünscht ist. Bei dieser bekannten Lösung bleibt die gesamte Tischfläche des Schreibtisches durch die zusätzliche Pultplatte unbeeinflußt, so daß während der stehenden Tätigkeit am Stehpult die Arbeitsunterlagen auf der Tischplatte des Schreibtisches liegen bleiben können. Diese bekannte Lösung setzt jedoch einen Schreibtischaufsatz voraus, wie er bei heutigen Schreibtischen, die im allgemeinen frei im Raum stehen, nicht vorhanden ist.

Aus der GB—PS 998 339 ist ein Schreibtisch bekannt, der mit einem Zeichenbrett ausgestattet ist, das in der Ruhestellung unter die Tischplatte geschoben ist. Um das Zeichenbrett in seine Arbeitsstellung zu bringen, wird ein das Zeichenbrett tragender Rahmen geführt unter der Tischplatte herausgezogen, das Zeichenbrett hochgeschwenkt und mittels Streben abgestützt. Um das Zeichenbrett in der Arbeitsstellung abstützen zu können, muß die Tischplatte des Schreibtisches teilweise weggeklappt werden. Die Tischplatte steht daher nicht zur Verfügung, wenn das Zeichenbrett benutzt wird. Die benutzerseitige Kante des Zeichenbretts befindet sich in der Arbeitsstellung auf der Höhe der Tischplatte, so daß eine Verwendung als Stehpult ausgeschlossen ist.

Der Erfindung liegt die Aufgabe zugrunde, einen Schreibtisch der eingangs genannten Gattung so auszubilden, daß sich die zusätzliche Pultplatte in der Arbeitsstellung zur Verwendung als Stehpult eignet.

Diese Aufgabe wird bei einem Schreibtisch der eingangs genannten Gattung erfindungsgemäß gelöst durch die Merkmale des kennzeichnenden Teils des Patentanspruchs 1.

Vorteilhafte Ausführungsformen der Erfindung sind in den Unteransprüchen angegeben.

Bei dem erfindungsgemäßen Schreibtisch befindet sich die zusätzliche Pultplatte mit ihren Stützholme in der Ruhestellung vollständig unter der Tischplatte des Schreibtisches, so daß sie unsichtbar ist und keinen Platz wegnimmt. Die Pultplatte kann mit einfachen Handgriffen in die Arbeitsstellung gebracht werden. Hierzu wird die Pultplatte mit ihren Stützholmen unter der Tischplatte herausgezogen, die Stützholme werden hochgeschwenkt und anschließend verriegelt. Die Pultplatte befindet sich in der Arbeitsstellung in der für die Verwendung als Stehpult geeigneten Höhe und wird durch die verriegelten Stützholme stabil gehalten. Da die Pultplatte nur durch die vertikalen Stützholme getragen wird und keine weitere Abstützung aufweist, ragt sie frei über die Tischplatte des Schreibtisches. Die Arbeitsfläche des Schreibtisches muß daher nicht geräumt werden, um das Stehpult benutzen zu können. Alle benötigten Arbeitsunterlagen und -geräte können auf der Tischplatte des Schreibtisches liegen bleiben. Dies ermöglicht in Verbindung mit der einfachen Handhabung ein schnelles und bequemes Wechseln zwischen sitzender und stehender Tätigkeit.

Die Konstruktion des zusätzlichen Stehpultes ist einfach, so daß das Stehpult den Schreibtisch nicht wesentlich aufwendiger macht. Insbesondere eignet sich das Stehpult auch zur Nachrüstung vorhandener Schreibtischmodelle. Es ist nur erforderlich, die Teleskopschienen unter der Tischplatte des Schriebtisches anzubringen. Diese können an der Unterseite der Tischplatte, seitlich an Unterschränken des Schreibtisches oder auch an einem zusätzlich unter dem Schreibtisch anbringbaren Gestell angebracht werden.

In einer bevorzugten Ausführungsform sind die Stützholme in der Ruhestellung seitlich neben den Auszugteilen der Teleskopschiene angeordnet. Die Pultplatte befindete sich dabei in dem vom Benutzer abgekehrten Bereich des Schreibtisches unter der. Tischplatte. Die Pultplatte verringert in der Ruhestellung daher nicht die freie Höhe des für den Benutzer zur Verfügung stehenden Beinraumes.

Da sich in dieser Ausführungsform die Pultplatte in der Ruhestellung ausserhalb dss Beinraumes des Benutzers befindet, kann sie in der Ruhestellung auch nach unten gerichtet angeordnet sein. Die Pultplatte erfüllt dadurch zusätzlich die Funktion eines Sichtschutzes, der den Beinraum auf der dem Benutzer gegenüberliegenden Seite abschließt. Da die Pultplatte in der Arbeitsstellung ohnehin die für die Verwendung als Stehpult geeignete Neigung gegenüber den Stützholmen aufweist, kann sie diese Neigung gegenüber den Stützholmen auch in der Ruhestellung beibehalten. Es ist also nicht notwendig, die Pultplatte gegen die Stützholme zu verschwenken, wenn das Stehpult von der Ruhestellung in die Arbeitsstellung oder umgekehrt gebracht wird. Die Handhabung wird dadurch weiter vereinfacht. Sofern man auf eine Einstellbarkeit des Neigungswinkels der Pultplatte in der Arbeitsstellung verzichtet, kann in dieser Ausführungsform die Pultplatte sogar starr mit den Stützholmen verbunden sein. Dies ergibt eine besonders preisgüngstige und stabile Konstruktion.

In einer anderen Ausführungsform sind in der Ruhestellung die Stützholme und die Auszugteile in gestreckter Lage aneinander anschließend angeordnet. Die Pultplatte befindet sich dadurch in der Ruhestellung auf der dem Benutzer zugewandten Seite unter der Tischplatte. Die Höhe des freien Beinraumes unter dem Schreibtisch wird somit um die Stärke der Pultplatte verringert. Soll das Stehpult in Benutzung genommen werden, so kann die Pultplatte beim Auszug in zwei aufeinanderfolgenden Schritten in die Arbeitsstellung geschwenkt werden. Nach einem Auszugweg, der der Tiefe der Pultplatte entspricht, kann diese gegen die Stützholme verschwenkt werden, um die für die Arbeitsstellung vorgesehene Neigung gegenüber den Stützholmen einzunehmen. Anschließend werden die Stützholme weiter herausgezogen, bis ihr Schwenkpunkt über die Tischkante hinausgezogen ist, so daß die Stützholme in ihre vertikale Stellung hochgeschwenkt werden können. Anschließend erfolgt die Verriegelung der Stützholem. Aufgrund dieses Hochschwenkens in zwei Schritten wird nur ein geringerer freier Auszugweg für das Stehpult benötigt. Dies ist unter Umständen bei beengten Platzverhältnissen von Vorteil.

Im folgenden wird die Erfindung anhand von in der Zeichnung dargestellten Ausführungsbeispielen näher erläutert. Es zeigen:

Figur 1 eine perspektivische Darstellung eines erfindungsgemäß mit einem Stehpult ausgestatteten Schreibtisches,

Figur 2 eine in der Mittelebene geschnittene Darstellung des Schreibtisches in einer ersten Ausführungsform,

Figur 3 ein Scharnier dieses Schreibtisches in gestreckter Stellung,

Figur 4 dieses Scharnier in abgewinkelter Stellung,

Figur 5 eine in der Mittelebene geschnittene Darstellung des Schreibtisches in einer zweiten Ausführungsform,

Figur 6 in vergrößerter Darstellung das in Figur 5 eingekreiste Detail dieses Schreibtisches,

Figur 7 eine Schnittansicht gemäß der Linie A-A in Figur 6,

Figur 8 eine Schnittansicht gemäß der Linie B-B in Figur 6,

Figur 9 eine Frontansicht des Schwenkgelenks des Schreibtisches der Figur 5,

Figur 10 eine Steitenansicht dieses Schwenkgelenks und

Figur 11 eine Draufsicht auf dieses Schwenkgelenk.

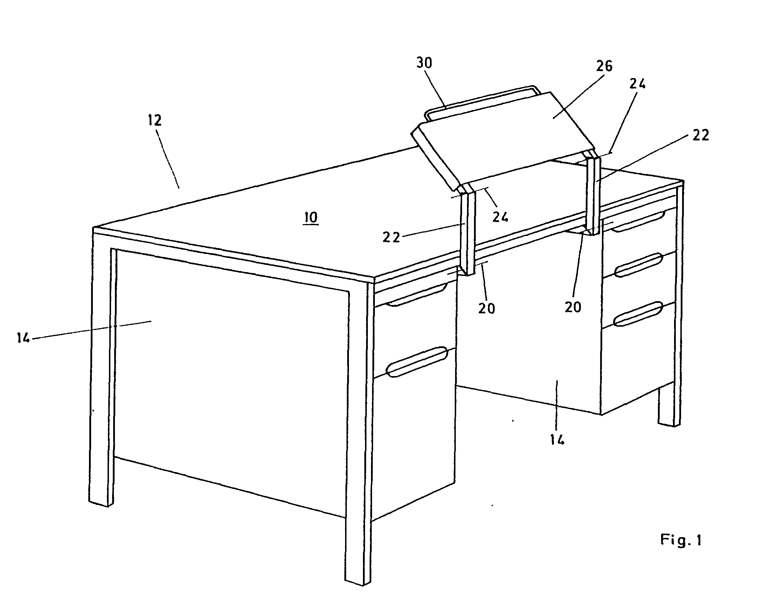

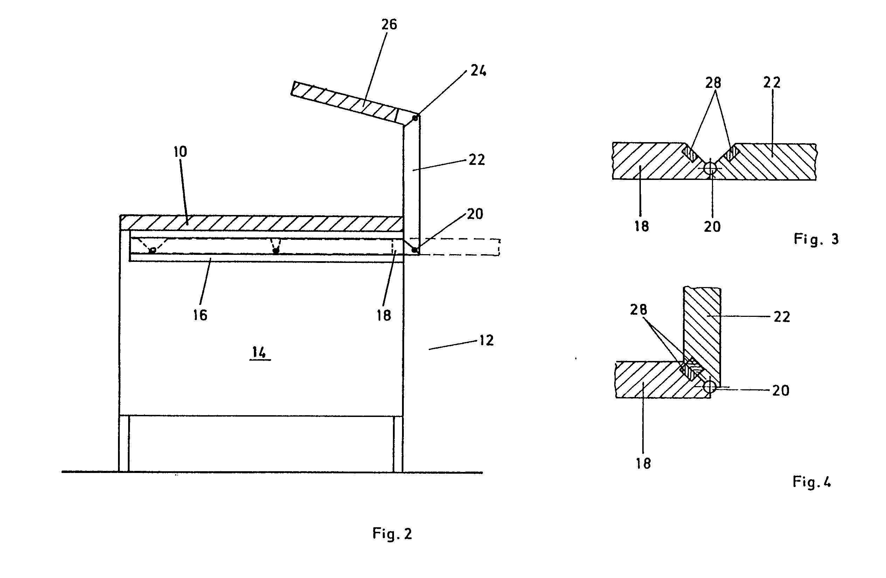

In dem ersten Ausführungsbeispiel in den Figuren 1 bis 4 sind unter der Tischplatte 10 eines Schreibtisches 12 an Unterschränken 14 beiderseits des Beinfreiraumes Teleskopschienen 16 befestigt. Die Teleskopschienen 16 erstrecken sich nahezu über die gesamte Tiefe der Tischplatte 10 und sind insbesondere bis nahezu an die benutzerseitige Kante der Tischplatte 10 geführt. An dem benutzerseitigen Ende des Auszugteils 18 der Teleskopschienen 16 ist jeweils mittels eines Scharniers 20 ein Stützholm 22 angelenkt. Die beiden Stützholme 22 tragen an ihrem anderen freien Ende eine jeweils über Scharniere 24 mit den Stützholmen 22 gelenkig verbundene Pultplatte 26. Wie aus den Figuren 2 und 3 hervorgeht, sind die Scharniere 20 und die Gehrung der Auszugteile 18 und der Stützholme 22 so ausgebildet, daß die Stützholme 22 zwischen einer mit den Auszugteilen 18 fluchtenden und einer zu den Auszugteilen 18 senkrechten, nach oben ragenden Stellung schwenkbar sind. In der senkrecht nach oben ragenden Stellung der Stützholme 22 werden diese durch Permanentmagneten 28 festgehalten, die in die Gehrungsflächen der Auszugteile 18 und der Stützholme 22 eingesetzt sind.

Die Scharniere 24 und die Gehrungen der Stützholme 22 und Pultplatte 26 sind so ausgebildet, daß die Pultplatte 26 zwischen einer mit den Stützholmen 22 fluchtenden Stellung und einer unter einem Winkel von beispielsweise 60° gegen die Stützholme 22 geneigten Stellung schwenkbar ist. Dieser Neigungswinkel der Pultplatte 26 gegen die Stützholme 22 ist so gewählt, daß die Pultplatte 26 in der aufgerichteten Arbeitsstellung eine für den Benutzer ergonomisch optimale Neigung aufweist. Gegebenenfalls kann der Neigungswinkel auch in geeigneter Weise verstellbar sein.

Die Bedienung des Stehpults in aus Figur 2 ersichtlich. In der gestrichelt gezeichneten Ruhestellung sind die Auszugsteile 18, die Stützholme 22 und die Pultplatte 26 in gestreckter Lage aneinander anschließend unter die Tischplatte 10 geschoben, so daß das gesamte Stehpult unsichtbar ist. Um das Stehpult in Betrieb zu nehmen, wird dieses z.B. mittels eines an seiner Oberkante angebrachten Handgriffs 30 unter die Tischplatte

10 horizontal herausgezogen, wie dies gestrichelt angedeutet ist. Sobald die Pultplatte 26 mit ihrem Scharnier 24 unter der Tischplatte 10 herausgezogen ist, kann die Pultplatte 26 nach oben geschwenkt werden. Anschließend werden die Stützholme 22 weiter horizontal herausgezogen, bis sich auch die Scharniere 20 vor der Tischplatte 10 befinden. Nun werden die Stützholme 22 senkrecht nach oben geschwenkt und in dieser Stellung durch die Permanentmagnete 28 gehalten. Anschließend werden die Auszugteile 18 wieder unter die Tischplatte 10 eingeschoben, bis die vertikal stehenden Stützholme 22 an der Tischkante anliegen. In dieser Arbeitsstellung werden die Stützholme in geeigneter Weise tischfest verriegelt, so daß das Stehpult stabil und beanspruchbar ist. Da die Pultplatte 26 durch ihr Eigengewicht und bei der Benutzung des Stehpults zusätzlich durch den Arbeitsdruck in der gekippten Stellung gehalten wird, ist an sich eine zusätzliche Verriegelung der Pultplatte 26 in Bezug auf die Stützholme 22 nicht erforderlich. Es können jedoch auch hier Permanentmagnete in den Gehrungsflächen vorgesehen sein, um die Pultplatte 26 zu halten.

Um nach Benutzung das Stehpult wieder in die Ruhestellung unter der Tischplatte 10 zu bringen, werden nach Lösen der Verriegelung die Stützholme 22 und die Pultplatte 26 gegen die Kraft der Magneten wieder in ihre mit den Auszugteilen 18 fluchtende Stellung gebracht und können zusammen mit diesen wieder unter die Tischplatte 10 geschoben werden.

In einer Abwandlung dieses Ausführungsbeispiels ist die Pultplatte 26 nicht mittels eines Scharniers und Gehrung an den Stützholmen 22 angebracht, sondern kann mittels eines feststellbaren Schwenkgelenks an die Stützholme 22 geklappt werden. Die Pultplatte 26 wird in dieser Ausführung parallel auf den Stützholmen aufliegend in die Ruhestellung unter die Tischplatte 10 geschoben. Diese Ausführung hat den Vorteil, daß die auf die Stützholme 22 geklappte Pultplatte 26 keinen zusätzlichen Platz in der Längsrichtung der Teleskopschienen 16 benötigt. Die Auszugteile 18 können daher eine größere Länge aufweisen, was der Teleskopführung eine bessere Stabilität gibt. Das Feststellen des Schwenkgelenks der Pultplatte 26 erfordert zwar einen zusätzlichen Handgriff beim Aufrichten des Stehpults, gibt aber auch eine zusätzliche einfache Möglichkeit, den Neigungswinkel der Pultplatte 26 in der Arbeitsstellung zu variieren.

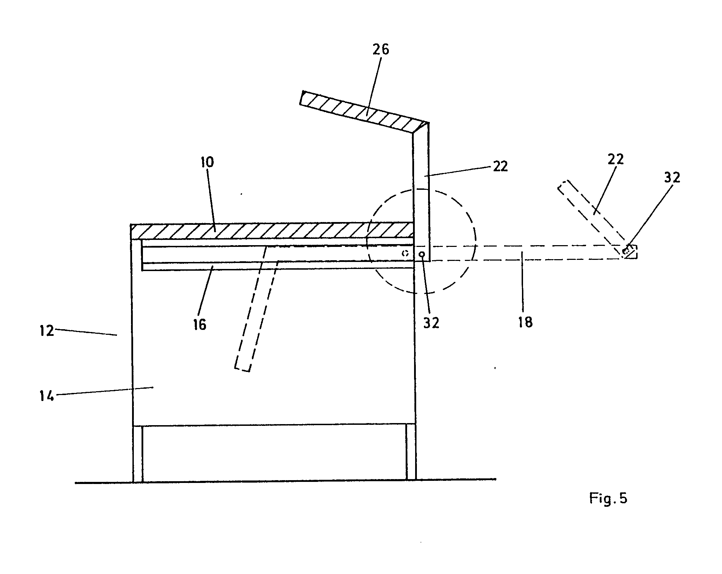

In dem in Figur 5 dargestellten Ausführungsbeispiel weisen die in den Teleskopschienen 16 geführten Auszugteile 18 im wesentlichen die gleiche Länge wie die Teleskopschienen 16 auf. Die Stützholme 22 sind an dem benutzerseitigen Ende der Auszugteile 18 mittels eines Gelenks 32 schwenkbar befestigt. In der Ruhestellung sind die Stützholme 22 in eine horizontale Stellung geschwenkt, in welcher sie unmittelbar neben den Auszugteilen 18 angeordnet und zusammen mit diesen unter die Tischplatte 10 geschoben sind, wie in Figur 5 gestrichelt eingezeichnet ist.

Die Pultplatte 26 befindet sich in dieser Ruhestellung in dem von dem Benutzer abgewandten Bereich des Schreibtisches.

In der in Figur 5 gezeichneten Ausführungsform ist die Pultplatte 26 unter dem vorgegebenen Neigungswinkel von z.B. ca. 60° starr mit den Stützholmen 22 verbunden. In der Ruhestellung ragt die Pultplatte 26 daher von den horizontal angeordnete Stützholmen 22 schräg nach unten, wie dies gestrichelt dargestellt ist. Die Pultplatte 26 schließt auf diese Weise den Beinraum nach vorn ab und bildet einen Sichtschutz für die Beine des Benutzers.

Um das Stehpult aus der in Figur 5 gestrichelt gezeigten Ruhestellung in die Arbeitsstellung zu bringen, werden zunächst die Auszugteile 18 der Teleskopschienen 16 mit den Stützholmen 22 waagerecht unter der Tischplatte 18 über ihre volle Länge herausgezogen, so daß die Stützholme 22 mit der Pultplatte 26 vor der benutzerseitigen Kante der Tischplatte 10 nach oben geschwenkt werden können, wie in Figur 5 ebenfalls gestrichelt angedeutet ist. Sobald die Stützholme 22 ihre vertikal stehende Stellung eingenommen haben, werden die Auszugteile 18 wieder in den Teleskopschienen 16 unter die Tischplatte 10 geschoben, bis die Stützholme 22 an der Tischkante anliegen, wie dies in Figur 5 ausgezogen gezeichnet ist. In dieser Stellung werden die Stützholme 22 vorzugsweise tischfest verriegelt, damit das Stehpult in seiner Arbeitsstellung stabil und belastbar ist.

Um das Stehpult aus der Arbeitsstellung wieder in die Ruhestellung zu bringen, werden nach Lösen der Verriegelung die Auszugteile 18 mit den vertikal stehenden Stützholmen 22 wieder ausgezogen, bis die Stützholme 22 mit der Pultplatte 26 wieder nach unten in die horizontale Lage geschwenkt werden können. Anschließend wird das Stehpult unter die Tischplatte 10 geschoben.

Die starre Verbindung der Pultplatte 26 mit den Stützholmen 22 ergibt eine stabile und preisgünstige Konstruktion. Die große Länge der Auszugteile 18 verbessert zusätzlich die Stabilität.

Anstelle einer starren Verbindung von Pultplatte 26 und Stützholmen 22 können diese auch über ein feststellbares Schwenkgelenk miteinander verbunden sein. Mit Hilfe dieses Schwenkgelenkes kann der Neigungswinkel zwischen Pultplatte 26 und Stützholmen 22 nach Wunsch eingestellt werden. Wird die Pultplatte 26 in der Ruhestellung als Sichtschutz verwendet, so kann die Pultplatte 26 mit festgestelltem Neigungswinkel verbleiben, auch wenn das Stehpult von der Arbeitsstellung in die Ruhestellung und umgekehr gebracht wird.

Bei einer Verbindung von Pultplatte 26 und Stützholmen 22 über ein Schwenkgelenk ist es auch möglich, die Pultplatte 26 in der Ruhestellung horizontal entweder in gestreckter Lage in Verlängerung der Stützholmen 22 oder auf bzw. zwischen diese geklappt anzuordnen. In diesem Fall muß zum Aufrichten und Herunterklappen des Stehpults die Feststellung des Schwenkgelenks zwischen Pultplatte 26 und Stützholmen 22 jeweils gelöst und wieder festgestellt werden.

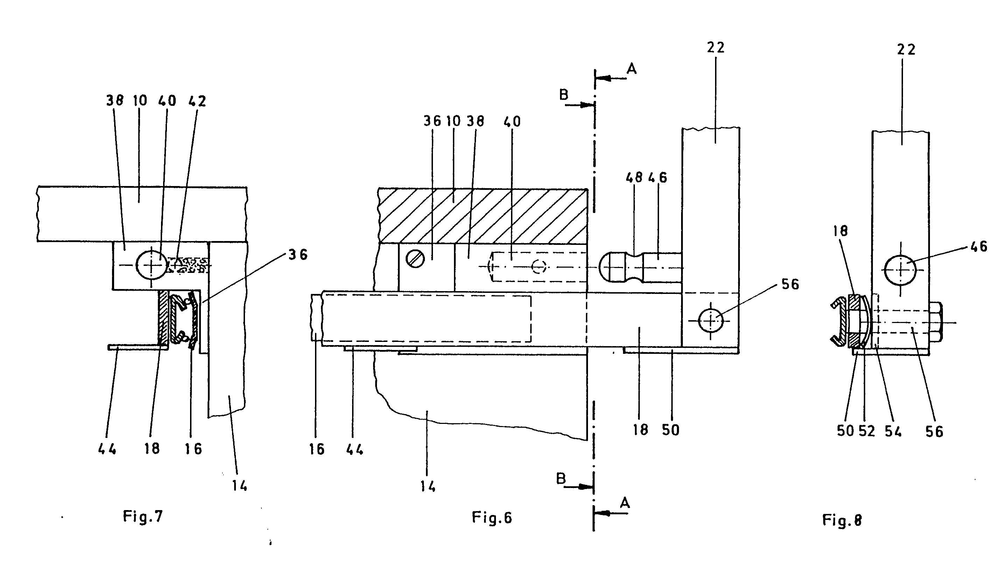

In den Figuren 6 bis 8 sind die schwenkbare Befestigung der Stützholme 22 an den Auszugteilen 18 der Teleskopschienen 16 und die Verriegelung der Stützholme 22 in der Arbeitsstellung in einem Ausführungsbeispiel im Detail dargestellt.

An dem ausziehbaren freien Ende des in der Teleskopschiene 16 geführten Auszugteils 18 ist mittels eines Bolzens 56 schwenkbar der Stützholm 22 gelagert. Am Ende des Stützholmes 22 ist ein lappenförmiger Anschlag 50 angeschweißt, der seitlich über das Profil des Stützholms 22 hinausragt und an dem Auszugteil 18 von unten zur Anlage kommt, wenn der Stützholm 22 seine vertikale Stellung einnimmt. Der Anschlag 50 verhindert, daß der Stützholm 22 beim Hochschwenken über die vertikale Lage hinaus auf den Benutzer zukippt.

Die Teleskopschiene 16 ist an einem plattenförmigen Beschlag 36 angeschweißt, der zur Befestigung der Teleskopschiene 16 an dem Schreibtisch 12 befestigt ist, in dem er z.B. an dem Unterschrank 14 angeschraubt ist. An dem Beschlag 36 ist zwischen der Teleskopschiene 16 und der Tischplatte 10 ein Block 38 vorgesehen, der eine sich gegen die Tischkante hin öffnende, zu der Teleskopscheine 16 parallele Verriegelungsbohrung 40 aufweist. An dem Stützholm 22 ist ein Verriegelungszapfen 46 angebracht, der derart senkrecht von dem Stützholm 22 absteht, daß er bei vertikal aufgerichtetem Stützholm 22 horizontal gegen die Verriegelungsbohrung 40 gerichtet ist. Wird bei aufgerichtetem Stehpult das Auszugteil 18 unter die Tischplatte 10 geschoben, so dringt der Verriegelungszapfen 46 in die Verriegelungsbohrung 40 ein und wird in der Verriegelungsbohrung 40 durch eine in dem Block 38 angeordnete federbelastete Rastkugel 42 gehalten, die in eine Umfangsrastnut 48 des Verriegelungszapfens 46 einschnappt. Auf diese Weise ist der Stützholm 22 in der Arbeitsstellung des Stehpults verriegelt. Da der Verriegelungszapfen 46 praktisch spielfrei in der Verriegelungsbohrung 40 sitzt, wird das gesamte bei der Benutzung des Stehpults auf die Stützholme 22 wirkende Kippmoment über den Verriegelungszapfen 46 und den Beschlag 36 von dem Schreibtisch 12 aufgenommen, ohne daß die Teleskopführung belastet wird. Das Stehpult ist daher in seiner Arbeitsstellung äusserst stabil.

Werden die Stützholme 22 in die horizontale Lage heruntergeschwenkt, um das Stehpult in die Ruhestellung zu bringen, so können die Stützholme 22 aufgrund ihres Eigengewichtes und des Gewichtes der Pultplatte 26 sehr schnell nach unten schwenken, was eine Verletzungsgefahr für den Benutzer mit sich bringt, wenn er seine Finger zwischen die Stützholme 22 und die Auszugteile 18 bringt. Um diese Verletzungsgefahr auszuschließen, ist auf den Bolzen 56 zwischen das Auszugteil 18 und den Stützholm 22 eine Tellerfeder 52 eingesetzt, die mit einem Reibbelag 54 zusammenwirkt, der an dem Stützholm 22 angebracht ist. Der auf den Reibbelag wirkende Druck der Tellerfeder 52 bremst die Schwenkbewegung des Stützholms 22. Der Druck der Tellerfeder 52 und damit das auf den Stützholm 22 wirkende Bremsmoment können mittels des Bolzens 56 eingestellt werden, der mit einem Gewinde in das Auszugteil 18 eingreift und sich mit einem Rändelkopf an dem Stützholm 22 abstützt, wie in Figur 8 zu erkennen ist.

In der nach unten geschwenkten horizontalen Stellung liegt der Stützholm 22 auf einer Auflage 44 auf, die seitlich von dem Auszugteil 18 absteht.

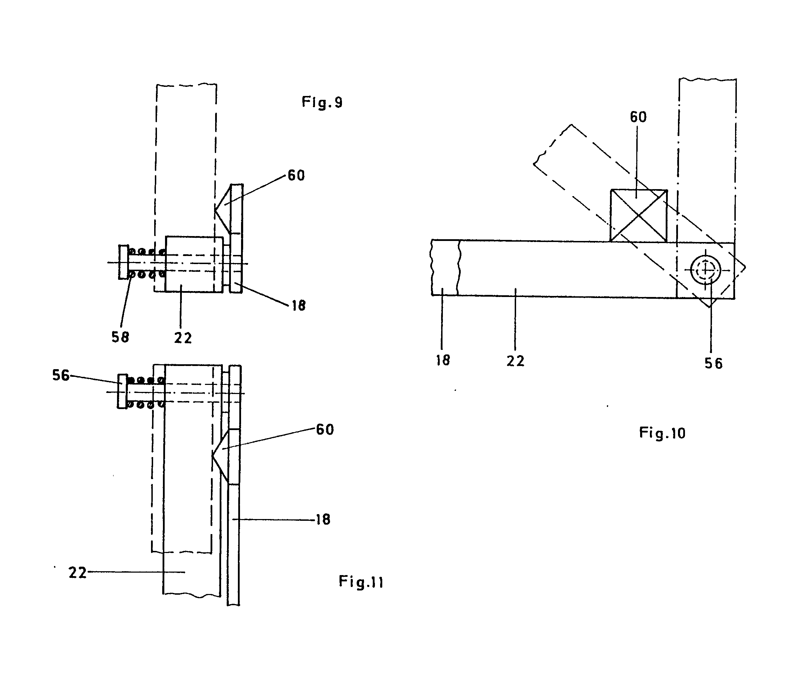

Die Figuren 9 bis 11 zeigen eine weitere Möglichkeit, wie verhindert werden kann, daß der Benutzer sich verletzt, wenn er seine Finger beim Herunterschwenken der Stützholme 22 zwischen die Stützholme 22 und das Auszugteil 18 bringt. Hierzu ist an den Auszugteilen 18 ein in die Schwenkebene der Stützholme 22 vorspringender Nocken 60 vorgesehen. Der Nocken 60 befindet sich in dem Winkelbereich der Schwenkbewegung des Stützholms 22 zwischen dessen horizontaler und vertikaler Stellung. der Stützholm 22 ist auf dem Bolzen 56 gegen den Druck einer auf dem Bolzen 56 sitzenden Druckfeder 58 von dem Auszugteil 18 abspreizbar.

In der horizontalen Stellung des Stützholms 22 liegt dieser unter dem Druck der Druckfeder 58 an dem Auszugteil 18 an und steht nicht mit dem Nocken 60 in Berührung. Wird der Stützholm 22 hochgeschwenkt, so bewegt er sich über den Nocken 60 hinweg, wobei er gegen den Druck der Druckfeder 58 von dem Auszugteil 18 weggedrückt wird, wie in den Figuren 9 bis 11 gestrichelt eingezeichnet ist. In der in Figur 10 stichpunktiert gezeigten vertikalen Stellung befindet sich der Stützholm 22 wieder ausserhalb des Winkelbereichs des Nocken 60 und wird durch die Druckfeder 58 an dem Auszugteil 18 anliegend gehalten. Beim Herunterschwenken des Stützholms 22 aus der vertikalen Arbeitsstellung in die horizontale Ruhestellung wird der Stützholm 22 in gleicher Weise durch den Nocken 60 von dem Auszugteil 18 abgespreizt. Der Stützholm 22 hält aufgrund des Nockens 60 beim Herunterschwenken somit stets einen so großen Abstand von dem Auszugteil 18, daß die Finger des Benutzers beim Herunterschwenken nicht zwischen dem Stützholm 22 und dem Auszugteil 18 eingeklemmt werden können. Der Nocken 60 bewirkt zusätzlich eine Arretierung der Stützholme 22 in der vertikalen Arbeitsstellung.

In den gezeichneten Ausführungsbeispielen sind jeweils zwei Stützholme 22 vorgesehen, an denen die Pultplatte 26 angebracht ist. Um ein formschöneres Aussehen des Stehpultes zu erreichen, ist es auch möglich, die beiden in den Teleskopschienen 16 geführten Stützholme 22 mit einer Querstrebe zu verbinden, wobei die Pultplatte von einem einzigen weiteren Stützholm getragen wird, der mittig an dieser Querstrebe angebracht ist.

In einer weiteren Abwandlung ist einer Querstrebe vorgesehen, die mit ihren beiden Enden unmittelbar schwenkbar in den benutzerseitigen Enden der Auszugteile 18 der Telekopschienen 16 gelagert ist. Die Stützholme oder vorzugsweise nur ein einziger Stützholm ist an dieser Querstrebe angebracht und ragt von dieser senkrecht ab, so daß er bei Drehung der Querstrebe zwischen seiner horizontalen Ruhestellung der vertikalen Arbeitsstellung verschwenkt wird. Die Verriegelung in der vertikalen Arbeitsstellung erfolgt in einer den Figuren 6 bis 8 entsprechenden Weise, indem zumindest an einem seitlichen Ende der Querstrebe ein Verriegelungszapfen vorgesehen ist. Da die Querstrebe senkrecht in den Auszugteilen 18 gelagert ist, ist bei dieser Ausführungsform keine Scherwirkung zwischen den Auszugteilen 18 und den Stützholmen 22 möglich, so daß keine Verletzungsgefahr besteht.

**Patentansprüche**

1. Schreibtisch (12) mit einer zusätzlichen Pultplatte (26), die geführt in eine Ruhestellung unter der Tischplatte (10) des Schreibtisches (12) schiebbar ist und die aus dieser Ruhestellung herausziehbar und in eine Arbeitsstellung hochschwenkbar ist, in welcher sie frei über die Tischplatte (10) ragt, dadurch gekennzeichnet, daß die Pultplatte (26) zur Verwendung als Stehpult von einem oder mehreren Stützholmen (22) getragen ist, daß unterhalb der Tischplatte (10), parallel zu dieser und senkrecht zu deren benutzerseitigen Kante Teleskopschienen (16) angeordnet sind, daß die Stützholme (22) jeweils an dem benutzerseitigen Ende des Auszugteiles (18) der Teleskopschienen (16) zwischen einer horizontalen, zu den Teleskopschienen (16) parallelen und einer im wesentlichen vertikalen nach oben gerichteten Stellung schwenkbar angebracht sind und daß die Stützholme (22) in der Arbeitsstellung verriegelbar sind.

2. Schreibtisch nach Anspruch 1, dadurch gekennzeichnet, daß die Stützholme (22) in der Ruhestellung neben dem jeweiligen Auszugteil (18) der Teleskopschienen (16) angeordnet sind und sich die Pultplatte (26) auf der benutzerfernen Seite des Schreibtisches (12) unter der Tischplatte (10) befindet.

3. Schreibtisch nach Anspruch 1, dadurch gekennzeichnet, daß die Stützholme (22) in der Ruhestellung in Verlängerung des jeweiligen Auszugteiles (18) der Teleskopschienen (16) angeordnet sind und sich die Pultplatte (26) auf der benutzernahen Seite des Schreibtisches (12) unter der Tischplatte (10) befindet.

4. Schreibtisch nach einem der vorhergehenden Ansprüche, dadurch gekennzeichnet, daß die Pultplatte (26) in ihrer Neigung verstellbar an den Stützholmen (22) angebracht ist.

5. Schreibtisch nach Anspruch 2, dadurch gekennzeichnet, daß die Pultplatte (26) in der Ruhestellung von den Stützholmen (22) nach unten ragt.

6. Schreibtisch nach Anspruch 5, dadurch gekennzeichnet, daß die Pultplatte (26) gegen die Stützholme (22) geneigt starr mit diesen verbunden ist.

7. Schreibtisch nach Anspruch 1, dadurch gekennzeichnet, daß die Stützholme (22) in der Arbeitsstellung in Bezug auf den Schreibtisch (12) verriegelbar sind.

8. Schreibtisch nach Anspruch 7, dadurch gekennzeichnet, daß die Stützholme (22) einen senkrecht abstehenden Verriegelungszapfen (46) aufweisen, der bei vertikal stehendem Stützholm (22) horizontal gegen den Schreibtisch (12) gerichtet ist, und daß tischfeste Beschläge (36) mit einer Verriegelungsbohrung (40) vorgesehen sind, in welche die Verriegelungszapfen (46) eingreifen, wenn die vertikal stehenden Stützholme (22) mittels der Teleskopschienen (16) gegen den Schreibtisch (12) geschoben werden.

9. Schreibtisch nach einem der vorhergehenden Ansprüche, dadurch gekennzeichnet, daß in den benutzerseitigen Enden der Auszugteile (18) der Teleskopschienen (16) eine diese verbindende Querstrebe schwenkbar gelagert ist, an welcher der Stützholm/die Stützholme (22) senkrecht abstehend angebracht ist/sind.

10. Schreibtisch nach einem der vorhergehenden Ansprüche, dadurch gekennzeichnet, daß die Schwenkbewegung der Stützholme (22) gebremst ist.

11. Schreibtisch nach Anspruch 10, dadurch gekennzeichnet, daß zur Abbremsung der Schwenkbewegung zwischen den Stützholmen (22) und den Auszugteilen (18) der Teleskopschienen (16) am Schwenkpunkt eine gegen einen Reibbelag (54) drückende Tellerfeder (52) angeordnet ist.

12. Schreibtisch nach Anspruch 2, dadurch gekennzeichnet, daß die Stützholme (22) im bereich ihres Schwenkpunktes gegen eine Federkraft von den jeweiligen Auszugteilen (18) der Teleskopschienen (16) abspreizbar sind und daß an den Auszugteilen (18) jeweils ein Nocken (60) angebracht ist, der den Stützholm (22) während der Schwenkbewegung in dem Winkelbereich zwischen der vertikalen und der horizontalen Stellung von dem Auszugteil (18) wegdrückt.

**Revendications**

1. Bureau (12) avec un plateau de pupitre supplémentaire (26) qui peut être repoussé de manière guidée dans une position de repos sous le plan de travail (10) du bureau (12) et qui peut être tiré de cette position de repos et relevé dans une position de travail dans laquelle il surplombe librement le plan de travail (10), caractérisé en ce que, pour l'utilisation comme pupitre pour écrire debout, le plateau de pupitre (26) est porté par un ou plusieurs longerons de support (22); que, endessous du plan de travail (10), parallèlement à celui-ci et perpendiculairement à son bord dirigé vers l'utilisateur, sont disposés des rails télescopiques (16); que les longerons de support (22) sont respectivement montés sur l'extrémité du côté utilisateur de l'élément étirable (18) des rails télescopiques (16) de façon à pouvoir pivoter entre une position horizontale et parallèle aux rails télescopique (16) et une position sensiblement verticale dirigée vers le haut; et que les longerons de support (22) peuvent être verrouillés dans la position de travail.

2. Bureau selon la revendication 1, caractérisé en ce que, dans la position de repos, les longerons de support (22) sont disposés à côté de l'élément étirable (18) respectif des rails télescopiques (16) et que le plateau de pupitre (26) se trouve du côté du bureau (12) opposé à l'utilisateur, sous le plan de travail (10).

3. Bureau selon la revendication 1, caractérisé en ce que, dans la position de repos, les longerons de support (22) sont disposés dans le prolongement de l'élément étirable (18) respectif des rails télescopiques (16) et que le plateau de pupitre (26) se trouve du côté du bureau (12) proche de l'utilisateur, sous le plan de travail (10).

4. Bureau selon l'une des revendications précédentes, caractérisé en ce que le plateau de pupitre (26) est monté sur les longerons de support (22) de façon à permettre un réglage de son inclinaison.

5. Bureau selon la revendication 2, caractérisé en ce que, dans la position de repos, le plateau de pupitre (26) dépasse des longerons de support (22) vers le bas.

6. Bureau selon la revendication 5, caractérisé en ce que le plateau de pupitre (26) est incliné par rapport aux longerons de support (22) et solidarisé avec ceux-ci.

7. Bureau selon la revendication 1, caractérisé en ce que, dans la position de travail, les longerons de support (22) peuvent être verrouillés par rapport au bureau (12).

8. Bureau selon la revendication 7, caractérisé en ce que les longerons de support (22) comportent un tourillon de verrouillage (46) qui en dépasse perpendiculairement et qui, dans la position verticale du longeron de support (22), est orienté horizontalement vers le bureau (12); et qu'il comprend des ferrures (36) solidaires de la table, avec un alésage de verrouillage (40) dans lequel s'engagent les tourillons de verrouillage (46) lorsque les longerons de support (22) placés verticalement sont poussés contre le bureau (12) au moyen des rails télescopiques (16).

9. Bureau selon l'une des revendications précédentes, caractérisé en ce que dans les extrémités côté utilisateur des éléments étirables (18) des rails télescopiques (16) est montée de manière pivotante une barre transversale reliant lesdits éléments étirables et sur laquelle le (les) longeron(s) de support (22) est (sont) monté(s) de façon à s'en écarter perpendiculairement.

10. Bureau selon l'une des revendications précédentes, caractérisé en ce que le mouvement pivotant des longerons de support (22) est freiné.

11. Bureau selon la revendication 10, caractérisé en ce que pour le freinage du mouvement pivotant, une rondelle-ressort (52) poussant contre une garniture de friction (54) est disposée au point de pivotement entre les longerons de support (22) et les éléments étirables (18) des rails télescopiques (16).

12. Bureau selon la revendication 2, caractérisé en ce que, dans la région de leur point de pivotement, les longerons de support (22) peuvent être écartés, contre l'action d'un ressort, des éléments étirables (18) respectifs des rails télescopiques (16), et que les éléments étirables (18) sont respectivement munis d'un bossage (60) qui écarte le longeron de support (12) de l'élément étirable (18), pendant le mouvement pivotant, dans la zone angulaire entre la position verticale et la position horizontale.

## Claims

1. A writing desk (12) comprising an additional desk board (26) which can be pushed in a guided manner into a non-working position under the desk top (10) of the writing desk (12) and which can be pulled out of this non-working position and pivoted up into a working position in which it projects freely above the desk top (10), characterized in that the desk board (26) is supported for use as a high-standing board by one or more supporting bars (22), in that telescopic rails (16) are arranged beneath the desk top (10), parallel to the latter and at right angles to the edge at the user's side, in that the supporting bars (22) are each fastened to the end at the user's side of the pull-out parts (18) of the telescopic rails (16) to be pivotable between a horizontal position, parallel to the telescopic rails (16) and a position substantially directed vertically upwards, and in that the supporting bars (22) can be locked in the working position.

2. A writing desk according to Claim 1, characterized in that the supporting bars (22) are arranged in the non-working position against the appropriate pull-out part (18) of the telescopic rails (16) and the desk board (26) is located below the desk top (10) of the writing desk (12) on the side furthest from the user.

3. A writing desk according to Claim 1, characterized in that the supporting bars (22) are arranged in the non-working position in a prolongation of the appropriate pull-out part (18) of the telescopic rails (16) and the desk board (26) is located below the desk top (10) of the writing desk (12) on the side nearest to the user.

4. A writing desk according to any one of the preceding Claims, characterized in that the desk board (26) is fastened to the supporting bars (22) in such a way that its inclination is adjustable.

5. A writing desk according to Claim 2, characterized in that in the non-working position the desk board (26) projects downwards from the supporting bars (22).

6. A writing desk according to Claim 5, characterized in that the desk board (26) is fastened rigidly to the supporting bars (22) and inclined with respect to these.

7. A writing desk according to Claim 1, characterized in that in the working position the supporting bars (22) can be locked in relation to the writing desk (12).

8. A writing desk according to Claim 7, characterized in that the supporting bars (22) comprise a locking peg (46) projecting at right angles which, when the supporting bar (22) is vertical, is directed horizontally opposite the writing desk (12) and in that mountings (36) fixed to the desk are each provided with a locking hole (40) in which the locking pegs (46) engage when the supporting bars (22) in their vertical position are pushed against the writing desk (12) by means of the telescopic rails (16).

9. A writing desk according to any one of the preceding Claims, characterized in that in the ends at the user's side of the pull-out parts (18) of the telescopic rails (16) a cross-strut which connects them is pivotably fastened to which the supporting bar or bars (22) is or are fastened projecting at right angles.

10. A writing desk according to any one of the preceding Claims, characterized in that the pivoting movement of the supporting bars (22) is braked.

11. A writing desk according to Claim 10, characterized in that for the purpose of braking the pivoting movement a disc spring (52) pressing against a friction bearing (54) is arranged between the supporting bars (22) and the pull-out parts (18) of the telescopic rails (16) at the pivoting point.

12. A writing desk according to Claim 2, characterized in that the supporting bars (22), in the region of their pivoting points, can be prised away against the action of a spring from the appropriate pull-out parts (18) of the telescopic rails (16) and in that a stud (60) is attached on each pull-out part (18) which pushes the supporting bar (22) away from the pull-out part (18) during the pivoting movement in the angular region between the vertical and the horizontal position of the bar.

Fig. 1

EP 0 274 569 B1

Fig. 2

Fig. 3

Fig. 4

Fig. 5

EP 0 274 569 B1

Fig.7

Fig.6

Fig.8

Fig.10

Fig.9

Fig.11